# EUROPEAN PATENT APPLICATION

(11) **EP 4 231 168 A1**
(43) Date of publication of application: **23.08.2023**
(21) Application number: 20934446.4
(22) Date of filing: 08.12.2020
(51) Int. Cl.: G06F 16/182

(54) **MIMIC STORAGE SYSTEM AND METHOD FOR DATA SECURITY OF INDUSTRIAL CONTROL SYSTEM**

(30) Priority: 24.09.2020 CN 202011014273
(71) Applicant: China Nuclear Power Engineering Co., Ltd., Shenzhen, Guangdong 518124 (CN); Peking University Shenzhen Graduate School, Shenzhen, Guangdong 518055 (CN)
(72) Inventor: ZHANG, Lin, Shenzhen, Guangdong 518124 (CN); CHENG, Yibo, Shenzhen, Guangdong 518124 (CN); SUN, Hui, Shenzhen, Guangdong 518124 (CN); LI, Hui, Shenzhen, Guangdong 518124 (CN); ZHAI, Changchun, Shenzhen, Guangdong 518124 (CN); CUI, Gang, Shenzhen, Guangdong 518124 (CN); YE, Yulin, Shenzhen, Guangdong 518124 (CN); ZHANG, Jinhua, Shenzhen, Guangdong 518124 (CN); KANG, Lifu, Shenzhen, Guangdong 518124 (CN); MA, Huajun, Shenzhen, Guangdong 518124 (CN)
(74) Representative: Greaves Brewster LLP
(86) International application number: PCT/CN2020/134488
(87) International publication number: WO 2021/223431

(57) **Abstract**

The present invention provides a mimic storage system (100) for data security of industrial control system. The mimic storage system includes a dynamic heterogeneous module (10) and an object storage module (20) in communication with each other. The dynamic heterogeneous module (10) includes a heterogeneous functional module (11) and a dynamic management module (12) in communication with each other. The heterogeneous functional module (11) is used for constructing a plurality of erasure code encoding modes for a data file of the industrial control system. The dynamic management module (12) is used for performing pseudo-random rotation on the encoding modes. The object storage module (20) is used for performing erasure code encoding on the data file according to the encoding modes, and storing the data file. Further provided is a mimic storage method for data security of industrial control system. By means of the mimic storage system (100) and method, a mimic defense characteristic is integrated into a storage system of an industrial control system, such that the storage system has an active defense capability, thereby improving the security of the system.

## Description

### FIELD OF THE INVENTION

The present invention generally relates to the technical field of an industrial control system and, more particularly, to a mimic storage system and method for data security of industrial control system.

### BACKGROUND OF THE INVENTION

At present, with the rapid development of industrial internet, industrial control system is also evolving continuously. As the basic information storage equipment of nuclear power plant industrial control system, the safety and reliability of the storage system node of the nuclear power plant control system is very important for the whole system. At present, the storage system is facing a severe network security situation. It is more and more important to study the corresponding network security defense technology for various kinds of network attack means.

Conventional defense technologies mainly include firewall, authentication technology, access control, virus prevention, intrusion detection, vulnerability scanning, information encryption and disaster recovery. Conventional defense technologies have some inherent disadvantages, such as the defense ability is passive and static, defense ability depends on the system configuration before accessing the system, only defend the network security attacks involved in the system configuration. However, network security defense is a dynamic changing process, with new security vulnerabilities emerging and hackers' attack methods constantly being updated. Conventional defense technology is difficult to detect, identify and deal with the new network attack means, can only passively receive every intrusion from the network, and cannot solve the network security problem fundamentally. Therefore, conventional security defense technology is difficult to solve the security problems of the industrial control system.

Distributed file system (DFS) means that the physical storage resources managed by the file system are not necessarily directly connected to the local node, but connected to a node (which can be simply understood as a computer) via a computer network. The design of the distributed file system is based on the client/server model, where a typical network may include multiple servers accessible by multiple users. The distributed file system is based on client/server technology, where one or more file servers work with the client file system. In this manner, the client is allowed to access the files managed by the server. Because control functions are spread between the client and the server, some of the issues that are easy to handle on a file system in a centralized system become quite complex in the distributed file system, such as sharing, data security and transparency. There is a corresponding need to develop some important technologies, such as remote procedure call, bulk caching, process stub, threads and virtual file systems (VFS). In the context of "known risks," these technologies require a certain amount of clear and reliable prior knowledge, such as sources, characteristics and aggressive behavior. Due to passivity and hysteresis, the existing security mechanisms of DFS can hardly deal with unknown risks.

Mimic distributed file system (MDFS), which delineate mimic boundaries with file interfaces, heterogeneous and redundant the entire storage system, by comparing the responses of multiple systems to data files for access requests, realize threat perception and correction of data results. The architecture of mimic distributed file system takes the standard protocol interface as the object of mimic and can mask the implementation details of heterogeneous systems, to form the distributed file system of mimicry, while presenting the standard file interface to the outside world. MDFS realizes dynamic, heterogeneous, and redundant. However, MDFS does not solve the security problem brought by data reliability. MDFS only solves the problem of active defense of the storage system. However, for the case of data loss that may happen to nodes, there is no mechanism to ensure that the system can restore the original data. The data reliability of the system is guaranteed by the mechanism of each heterogeneous file system that makes up MDFS. Because the data reliability of different file systems is different, the data reliability of all nodes cannot be guaranteed, and the data reliability of the whole system cannot be guaranteed. In addition, because of the isomerization of MDFS at the level of the whole system, the performance of different storage systems composed of MDFS is different, which extends the response time of the system and leads to performance loss relative to a single structured storage system. At the same time, the multi-copy redundancy mechanism leads to the high storage cost of the system.

In view of the foregoing, what is needed, therefore, is to provide a mimic storage system and method for data security of industrial control system to overcome the above disadvantages.

### SUMMARY OF THE INVENTION

One object of the present invention is to provide a mimic storage system and method for data security of an industrial control system, which realizes the integration of the mimic defense characteristics into the storage system of the industrial control system, thereby having the active defense ability and improving the security of the system.

According to one embodiment of the present invention, a mimic storage system for data security of industrial control system, includes a dynamic heterogeneous module and an object storage module in communication with each other, the dynamic heterogeneous module includes a heterogeneous functional module and a dynamic management module in communication with each other, the heterogeneous functional module is used for constructing a plurality of erasure code encoding modes for a data file of an industrial control system, the dynamic management module is used for performing pseudo-random rotation on the encoding modes, and the object storage module is used for performing erasure code encoding on the data file according to the encoding modes, and storing the data file.

According to one aspect of the present invention, the object storage module includes an interface server module, an object storage device module and a metadata server module, the interface server module is used for performing erasure code encoding on the data file according to the encoding modes to form n (n is an integer) data blocks, the object storage device module is in communication with the interface server module, the object storage device module is used for storing the data block, the interface server module is used for separating the file metadata in the data file, and the metadata server module is used for maintaining the file metadata.

According to one aspect of the present invention, the object storage module also includes a load balancing module in communication with the interface server module, and the load balancing module is used for transmitting a file operation of the client to the interface server module.

According to one aspect of the present invention, the object storage device module includes a message queuing module, the message queuing module is in communication with and connected between the interface server module and the object storage device module, the message queuing module is used for realizing service function between the interface server module and the object storage device module.

According to one aspect of the present invention, the service function includes a heartbeat service module and a location service module.

According to one aspect of the present invention, the interface server module is used for dividing the data file into k (k is an integer, k<n) parts, and performing encoding on the data file of each part according to different encoding modes to generate n data blocks.

According to one aspect of the present invention, the dynamic heterogeneous module includes a redundant voting module in communication with the heterogeneous functional module.

According to another embodiment of the present invention, mimic storage method for data security of industrial control system includes the steps of:
constructing a plurality of erasure code encoding modes for a data file of an industrial control system;
performing pseudo-random rotation on the encoding modes; and
performing erasure code encoding on the data file according to the encoding modes, and storing the data file.

According to one aspect of the present invention, the step of performing erasure code encoding on the data file according to the encoding modes, and storing the data file further includes the steps of:
performing erasure code encoding on the data file according to the encoding modes, to form n (n is an integer) data blocks, and separating the file metadata in the data file;
storing the data blocks; and
maintaining the file metadata.

According to one aspect of the present invention, the step of performing erasure code encoding on the data file according to the encoding modes, to form n (n is an integer) data blocks includes the steps of:
dividing the data file into k (k is an integer, k<n) parts; and
performing encoding on the data file of each part according to different encoding modes to generate n data blocks.

Compared with the prior art, the present invention provides a mimic storage system and method for data security of an industrial control system, the heterogeneous functional module is used for constructing a plurality of erasure code encoding modes for a data file of the industrial control system, the object storage module is used for performing erasure code encoding on the data file according to the encoding modes, and storing the data file, and the dynamic management module is used for performing pseudo-random rotation on the encoding modes, to make the attacker unable to determine the state of the system at a certain time and realizes the dynamic characteristic of the mimic defense. Different erasure codes are adopted in the coding process of the same data file, which realizes the heterogeneous characteristics of mimic defense. The data files are encoded by different erasure codes and stored as multiple copies, which realizes the redundancy of mimic defense. The storage system which integrates the mimic defense characteristic into the industrial control system has active defense ability and improved the security of the system.

### BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.
Fig. 1 is a principle block diagram of a mimic storage system for data security of an industrial control system according to one embodiment of the present invention;
Fig. 2 is a principle block diagram of an object storage module of the mimic storage system for data security of an industrial control system according to one embodiment of the present invention;
Fig. 3 is a flow chart of a mimic storage method for data security of an industrial control system according to one embodiment of the present invention; and
Fig. 4 is a sub-step flow chart of step S30 of the mimic storage method for data security of an industrial control system according to one embodiment of the present invention.

### DETAILED DESCRIPTION OF THE INVENTION

The technical solution of the embodiments of the present invention will be described clearly and completely in combination with the drawings. Obviously, the embodiments described are only a part of the embodiments of the present invention, not all embodiments. Therefore, the following detailed description of embodiments of the present invention provided in the attached drawings is not intended to limit the scope of the present invention, but merely represents selected embodiments of the present invention. Based on the embodiments of the present invention, other embodiments obtained by one ordinary skilled in the art without creative work also fall within the scope of the present invention.

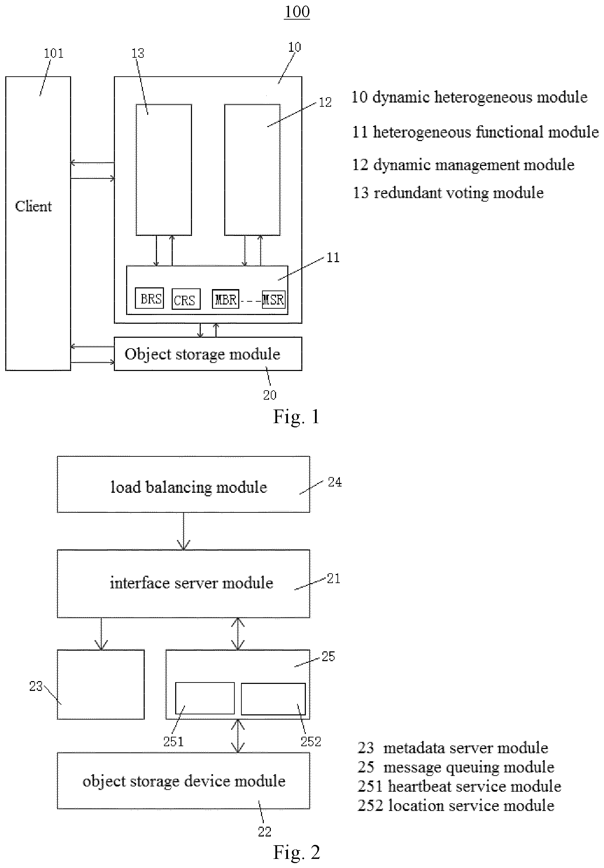

Referring to Fig. 1, one embodiment of the present invention provides a mimic storage system 100 for data security of an industrial control system, including a dynamic heterogeneous module 10 and an object storage module 20 in communication with each other.

The dynamic heterogeneous module 10 includes a heterogeneous functional module 11 and a dynamic management module 12 in communication with each other. The heterogeneous functional module 11 is used for constructing a plurality of erasure code encoding modes for a data file of an industrial control system, the dynamic management module 12 is used for performing pseudo-random rotation on the encoding modes, and the object storage module 20 is used for performing erasure code encoding on the data file according to the encoding modes, and storing the data file.

According to the mimic storage system 100 for data security of an industrial control system of the present invention, the heterogeneous functional module 11 is used for constructing a plurality of erasure code encoding modes for a data file of the industrial control system, the object storage module 20 is used for performing erasure code encoding on the data file according to the encoding modes, and storing the data file, and the dynamic management module 12 is used for performing pseudo-random rotation on the encoding modes, to make the attacker unable to determine the state of the system at a certain time and realizes the dynamic characteristic of the mimic defense. Different erasure codes are adopted in the coding process of the same data file, which realizes the heterogeneous characteristics of mimic defense. The data files are encoded by different erasure codes and stored as multiple copies, which realizes the redundancy of mimic defense. The storage system which integrates the mimic defense characteristic into the industrial control system has active defense ability and improves the security of the system.

More specifically, the heterogeneous functional module 11 includes a plurality of mimic heterogeneous executors, which are functionally identical and run in parallel. According to the present embodiment, the heterogeneity of the mimic storage system 100 is realized by using many different erasure codes for data files, and embedding many different erasure codes in the system, such as BRS, CRS, MBR, MSR, to realize the heterogeneous characteristics of mimic defense, and the data files are encoded by different erasure codes and stored as multiple copies, which realizes the redundancy of mimic defense.

The dynamic management module 12 is responsible for dynamic management configuration of the mimic storage system 100, including the use of pseudo-random rotation on the encoding modes, so that the attacker cannot determine the exact state of the system, thereby realizing the dynamic characteristic of mimic defense.

In the present embodiment, the dynamic heterogeneous module 10 also includes a redundant voting module 13 in communication with the heterogeneous functional module 11. Understandably, the redundant voting module 13 is responsible for determining the output and determining the correct output when the system is attacked to result in inconsistent output of different erasure codes, thereby further improving the security and reliability of the system.

Further referring to Fig. 2, the object storage module 20 includes an interface server module 21, an object storage device module 22 and a metadata server module 23. The interface server (IS) module 21 is used for performing erasure code encoding on the data file according to the encoding mode to form n (n is an integer) data blocks, the object storage device (OSD) module 22 is in communication with the interface server module 21, and the object storage device module 22 is used for storing the data blocks. The n data blocks are stored in different object storage device modules 22, which are responsible for storing the data blocks in persistent storage hardware, and using content addressing so that each data block is identified by its unique content identification. The interface server module 21 is also used for separating file metadata in the data file, and the metadata server (MDS) module 23 is used for maintaining the file metadata. In particular, the metadata server module 23 has file namespace management and object-relational mapping functions for maintaining the metadata of the data files, including file names, file sizes and block identifications.

In the present embodiment, the interface server module 21 is used for dividing the data file into k (k is an integer, k<n) parts, and encoding the data file of each part according to the different encoding method, to generate n data blocks, i. e. (k, n) erasure codes. Any k' (k'≥K) blocks can be used to recover the original data file. Because each encoding mode has different parameters, the size and number of data blocks from the same part of data file are different. The more the encoding modes, the less probability of successful attack. The mimic storage system 100 uses erasure codes as fault-tolerant redundancy technology, which consumes less storage space than the multi-copy redundancy method, can greatly reduce the storage cost, and has strong fault-tolerant capability. In addition, the system performs erasure code encoding mode on the data files. Because of the characteristics of the erasure codes, the system can still restore the original data correctly even if part of the data is lost.

In particular, the object storage module 20 further includes a load balancing module 24 in communication with the interface server module 21, the load balancing module 24 is used for transmitting a large number of concurrent file operations of the client 101 to the interface server module 21, thereby avoiding single point failure and greatly improving the concurrent access performance of the system.

Further, the object storage module 20 also includes a message queuing (MQ) module 25, and the message queuing module 25 is in communication with and seated between the interface server module 21 and the object storage device module 22. The message queuing module 25 is used for realizing the service function between the interface server module 21 and the object storage device module 22. The message queuing module 25 is an application-to-application communication method.

Specifically, the service function of the message queuing module 25 includes a heartbeat service module 251 and a location service module 252. The message queuing module 25 can choose Rabbit MQ (a mode of communication) to communicate, and the object storage device module 22 needs to notify all interface server modules 21 of its presence via the message queuing module 25. The information is the heartbeat information. All IS will create a message queue to bind the heartbeat service after IS started. Any message sent to the service will be forwarded to all message queues that bonded thereto. In other words, each IS receives a heartbeat message from any OSD. In order to obtain the location information of the specified data block, the interface server module 21 needs to create the location service beforehand, and all IS nodes are bonded to the service and receive messages from the interface server module 21, the OSD that owns the object notifies the node of the interface server module 21 using a single message.

Furthermore, the mimic storage system 100 also provides REST-based interfaces (such as the Amazon S3 interface) to allow applications to perform operations including constructing, reading, updating and deleting. The interface and functions of the system are as follows:

| Interface | Description |
|---|---|
| GET Service | Returns to list of buckets |
| PUT Bucket | Construct new bucket |
| DELETE Bucket | Delete bucket |
| GET Bucket | Returns to list of objects in the bucket |
| PUT Object | Add object to the bucket |
| GET Object | Get the contents of the object from the bucket |
| DELETE Object | Delete object |

In the mimic storage system 100 for data security of an industrial control system of the present invention, when client 101 uploads data files, first, client 101 sends the request of uploading files to IS, and provides the file name and content; Then, after IS receives the request, erasure codes are used to encode to obtain n data blocks; and then, n OSDs are randomly selected to store the data blocks in them, at the same time, the metadata of the file is stored in MDS. Finally, if the data block and metadata are uploaded successfully, IS returns the success identification to the client. When the client 101 downloads a data file: first, client 101 initiates a download request with a file name to IS; then, after IS receives a request from the client 101, the identification of the corresponding data block is queried to MDS by filename, and the location message is sent to the location exchange service to get the location of OSD, IS requests OSD to download data block and restores the original data file via the decoding phase of the erasure code. Finally, IS returns the data file to the client 101.

Therefore, the mimic storage system 100 for data security of an industrial control system of the present invention establishes a system structure of dynamic heterogeneous redundancy, the storage system of nuclear power plant industrial control system is transformed from similar, static to heterogeneous and dynamic, which forms an endogenous security effect to effectively resist unknown threats such as vulnerability backdoor, therefore, the industrial control system of nuclear power plant has the endogenous security ability of generalized robust control without relying on the prior knowledge of attack or behavior characteristics. In realizing heterogeneity of the system by a variety of erasure codes, because of the different encoding methods and parameters of different erasure codes, the size and number of coding blocks obtained from the same data block are different. The more the coding mode, the less likely the attack will succeed. It should be understood that the mimic storage system 100 not only can be used to improve the storage security of the industrial control system of a nuclear power plant, but also can be used to improve the defense capability of the system in any distributed storage application scenario, improving storage system security and data reliability.

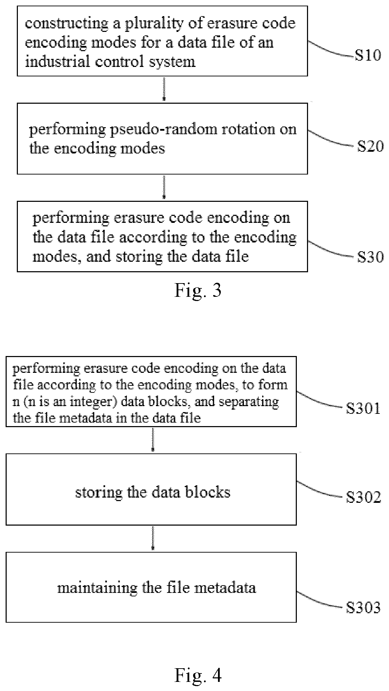

Referring to Fig. 3, the present invention also provides a mimic storage method for data security of an industrial control system including the steps of:
Step S10: constructing a variety of erasure codes encoding modes for a data file of the industrial control system;
Step S20: performing pseudo-random rotation on the encoding modes;
Step S30: performing erasure code encoding on the data file according to the encoding modes, and storing the data file.

Further, referring to Fig. 4, step S30 also includes the steps of:
Step S301: performing erasure code encoding on the data file according to the encoding modes, to form n (n is an integer) data blocks, and separating the file metadata in the data file;
Step S302: storing the data blocks;
Step S303: maintaining the file metadata.

Further, step S301 includes the steps of:
dividing the data file into k (k is an integer, k<n) parts;
performing encoding on the data file of each part according to different encoding modes to generate n data blocks.

It should be noted that, all embodiments of the mimic storage system 100 for data security of an industrial control system of the present invention are suitable for the mimic storage method for data security of an industrial control system of the present invention, and can achieve the same or similar technical effects.

In view of the foregoing, the mimic storage system 100 and method for data security of an industrial control system of the present invention introduce the concept of mimic defense, and the storage system of the industrial control system of a nuclear power plant is subjected to a mimic transformation. A mimic storage system is constructed to realize the dynamic, heterogeneous and redundant characteristics of the mimic defense, which makes the defense mode of the nuclear power plant industrial control system change from the traditional passive defense mode to the active defense mode, and improve the security of the system greatly. By introducing multiple erasure codes as heterogeneous executors, erasure codes have high storage utilization and strong fault-tolerance. Because the size and number of coding blocks obtained from the same data block are different, the more the coding modes are, the less likely the attack will succeed. The object storage module of the system is created, and the data is managed as an object and the file metadata in the data is separated. At the same time, the object storage service is provided to the outside, which allows the application program to carry out operations such as constructing, reading, updating and deleting.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A mimic storage system (100) for data security of industrial control system, **characterized in that** the mimic storage system (100) for data security of industrial control system comprises a dynamic heterogeneous module (10) and an object storage module (20) in communication with each other, the dynamic heterogeneous module (10) comprises a heterogeneous functional module (11) and a dynamic management module (12) in communication with each other, the heterogeneous functional module (11) is used for constructing a plurality of erasure code encoding modes for a data file of an industrial control system, the dynamic management module (12) is used for performing pseudo-random rotation on the encoding modes, and the object storage module (20) is used for performing erasure code encoding on the data file according to the encoding modes, and storing the data file.

2. The mimic storage system (100) for data security of industrial control system according to claim 1, **characterized in that** the object storage module (20) comprises an interface server module (21), an object storage device module (22) and a metadata server module (23), the interface server module (21) is used for performing erasure code encoding on the data file according to the encoding modes to form n (n is an integer) data blocks, the object storage device module (22) is in communication with the interface server module (21), the object storage device module (22) is used for storing the data block, the interface server module (21) is used for separating the file metadata in the data file, and the metadata server module (23) is used for maintaining the file metadata.

3. The mimic storage system (100) for data security of industrial control system according to claim 2, **characterized in that** the object storage module (20) also comprises a load balancing module (24) in communication with the interface server module (21), and the load balancing module (24) is used for transmitting a file operation of the client to the interface server module (21).

4. The mimic storage system (100) for data security of industrial control system according to claim 2, **characterized in that** the object storage device module (22) comprises a message queuing module (25), the message queuing module (25) is in communication with and connected between the interface server module (21) and the object storage device module (22), the message queuing module (25) is used for realizing service function between the interface server module (21) and the object storage device module (22).

5. The mimic storage system (100) for data security of industrial control system according to claim 4, **characterized in that** the service function comprises a heartbeat service module (251) and a location service module (252).

6. The mimic storage system (100) for data security of industrial control system according to claim 2, **characterized in that** the interface server module (21) is used for dividing the data file into k (k is an integer, k<n) parts, and performing encoding on the data file of each part according to different encoding modes to generate n data blocks.

7. The mimic storage system (100) for data security of industrial control system according to claim 1, **characterized in that** the dynamic heterogeneous module (10) comprises a redundant voting module (13) in communication with the heterogeneous functional module (11).

8. A mimic storage method for data security of industrial control system, **characterized in that** the mimic storage method for data security of industrial control system comprises the steps of:
constructing a plurality of erasure code encoding modes for a data file of an industrial control system;
performing pseudo-random rotation on the encoding modes; and
performing erasure code encoding on the data file according to the encoding modes, and storing the data file.

9. The mimic storage method for data security of industrial control system according to claim 8, **characterized in that** the step of performing erasure code encoding on the data file according to the encoding modes, and storing the data file further comprises the steps of:
performing erasure code encoding on the data file according to the encoding modes, to form n (n is an integer) data blocks, and separating the file metadata in the data file;
storing the data blocks; and
maintaining the file metadata.

10. The mimic storage method for data security of industrial control system according to claim 9, is **characterized in that** the step of performing erasure code encoding on the data file according to the encoding modes, to form n (n is an integer) data blocks comprises the steps of:
dividing the data file into k (k is an integer, k<n) parts; and
performing encoding on the data file of each part according to different encoding modes to generate n data blocks.
